Europäisches Patentamt

European Patent Office

Office européen des brevets

(11) Publication number: **0 156 416**
**A1**

# (12) EUROPEAN PATENT APPLICATION

(21) Application number: **85200271.6**

(22) Date of filing: **27.02.85**

(51) Int. Cl.⁴: **B 62 H 5/06**
**B 62 H 5/08**

(30) Priority: **05.03.84 NL 8400707**

(43) Date of publication of application:
**02.10.85 Bulletin 85/40**

(84) Designated Contracting States:
**BE DE FR GB LU NL**

(71) Applicant: **Van Wierst, Johannes Carel**
**"'t Reigernest" Lage Dijk 28 Rood**
**NL-1911 MT Uitgeest(NL)**

(72) Inventor: **Van Wierst, Johannes Carel**
**"'t Reigernest" Lage Dijk 28 Rood**
**NL-1911 MT Uitgeest(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) Locking device for a bicycle.

(57) Locking device for a bicyle, comprising a lock construction consisting of a housing with a keyhole and means for moving at least one locking pin, (21) to and fro between a retracted and an extended position, in which extended position, said locking pin is able to slot into an opening of (13',18') or recess provided in at least one of the parts of the bicycle rotatably mounted in the frame, and the housing of the lock forms an integral part, essentially unbreakably attached at both ends, of the tubular frame running at an angle from the pedal shaft to the ball head (1). Preferably provision is made in the pedal shaft (11) of the bicycle for at least one recess into which the free end of the locking pin can slot.

fig-4

EP 0 156 416 A1

1

Locking device for a bicycle

The invention relates to a locking device for a bicycle, comprising a lock construction consisting of a housing with a keyhole and means for moving at least one locking pin, with one end accommodated in the housing, to and fro beteen a retracted and an extended position, and with devices fitted in the housing by means of which the locking pin can be locked at least in the extended position and can be taken to the retracted position only by means of a key or similar object inserted in the keyhole, said housing being accommodated in and connected to a tube of the frame of the bicycle, and said locking pin being able to move to and fro essentially along the centre line of this tube and with its other free end, in the extended position, being able to slot into an opening or recess provided in at least one of the parts of the bicycle rotatably mounted in the frame. Such a locking device is known from Dutch Patent 2380.

The stealing and unlawful use of bicycles is an ever-increasing problem. Until now, attempts have been made to stop this evil by providing the bicycles with locks which in the locked position grip the rim of the rear wheel, so that the bicycle cannot be ridden, and/or by attaching the bicycle by means of a chain or cable to an object fixed in the ground, for example a lamp post.

However, bicycle stealing has of late been practised by well-equipped individuals, who can cut through the above-mentioned cables and chains with special tools and simply load the bicycles, locked with the above-mentioned locks, on to a vehicle, following which these locks are sawn through or removed in some other way at a quiet spot elsewhere. The stolen bicycles are then fully ready for use and can be sold.

In the known locking device the housing of the lock mechanism is fitted inside a horizontal tube of the frame and fixed there by means of screws running through the wall of the tube, while a short distance away from the top thrust bearing of the ball head the locking pin can slot into openings in the ball head tubes and the handlebar tube.

When a bicycle locked by means of this known locking device is taken away unlawfully, one can then cut through the handlebar tube, remove the handlebars, loosen the screws holding the housing of the locking mechanism, push the locking pin out of the openings in the handlebar tube and the ball head tubes, and then all one has to do is to fit new handlebars to have a bicycle which is ready for use again.

Besides, with this known locking device the handlebars of the bicycle cannot be adjusted in height, and the device can be used only for a man's bicycle.

The object of the invention is to produce a locking device of the above-mentioned type, which is designed in such a way that when locked the bicycle is essentially permanently unusable, due to the fact that, without being able to use the key serving the lock, the lock can be broken only by breaking up the locked, rotatable parts and the frame of the bicycle, so that only a few loose parts of the bicycle are usable as such.

This object is achieved in that in the locking device according to the invention the housing of the lock forms an integral part — essentially unbreakably attached at both ends — of the tubular frame running at an angle from the pedal shaft to the ball head.

0156416

In a locking device designed like this, the opening or recess into which the locking pin can slot may be provided either in the inner ball head tube or in the pedal shaft, which means that either the handlebars or the pedal shaft or, if two locking pins are used, both parts are locked, in which case the housing of the lock preferably forms a part of this tube situated between the ends of said tubular frame. This (these) lock(s) can be removed without a key only by sawing through or burning through the tubular frame and the lock(s) near the housing of the lock, and then removing the loose piece of locking pin from the opening and/or recess in question, following which the tubular frame has to be repaired, something which is practically impossible to do.

The removal of a pin slotted into a recess or opening becomes practically impossible if one fits in an end part of said tubular frame a guide element provided with an opening through which the locking pin is conducted with a sliding fitting, and if one fits on the locking pin a stop element projecting radially from the pin and located between the guide element and the free locking end part of the locking pin. If in this case, the tubular frame and the locking pin are sawn or burned through as described above, the pin part slotted into an opening or recess cannot be removed, since the stop element grips behind the guide element.

The removal of a locking pin also becomes totally impossible if the housing of the lock forms an end part of said tubular frame, so that the outside end of the housing is fixed in a sleeve of one of the connecting pieces of said tubular frame. For then, in order to remove the locking pin, the connecting piece would have to be sawn or burned through, which would damage the frame beyond repair.

It is pointed out that Dutch Patent 40050 already discloses a locking device for a bicycle, in which a locking pin running at an angle through the tubular frame from the pedal shaft to the ball head is used to lock the inner ball head tube. However, this pin is operated by a complex mechanism, by rotating the pedal shaft after a key inserted in a lock construction is turned and removed, said construction being fitted in the tubular frame running from the pedal shaft to the saddle. The bicycle can be unlocked by dismantling the pedal shaft.

The invention is described in greater detail with reference to the embodiments shown in the drawing.

Fig. 1 shows a bicycle in which a locking device according to the invention is fitted.

Fig. 2 shows in cross section, and on a larger scale, the lock of the inner ball head tube.

Fig. 3 shows in cross section, and on a larger scale, the lock of the pedal shaft.

Fig. 4 is another embodiment of the lock of the pedal shaft.

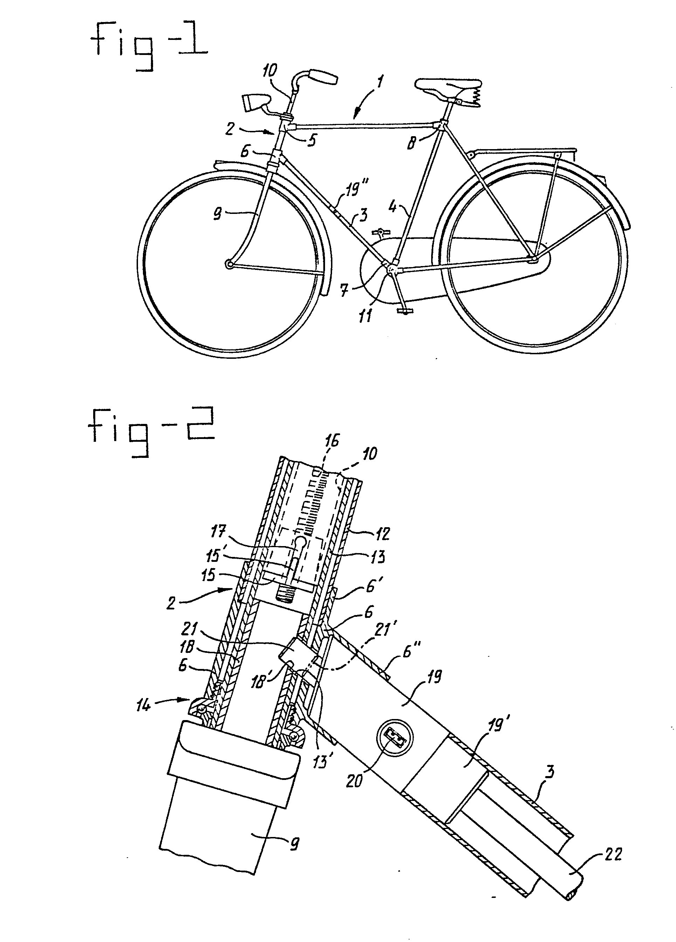

The bicycle shown in Fig. 1 comprises, inter alia, a frame consisting of a horizontal bar 1, a ball head 2, a tubular bar 3 running at an angle from this ball head to the pedal shaft, and a tubular bar 4, said bars being connected to one another by means of the connecting pieces 5, 6, 7 and 8. Rotatably mounted in the ball head 2 are the front wheel fork 9 and handlebar tube 10, which are connected to each other, and the pedal shaft 11 is rotatably mounted in the connecting piece 7.

As shown in Fig. 2, the ball head 2 comprises an outer ball head tube 12 which is fixed in the sleeve 6' of the connecting piece 6, and an inner ball head tube 13 which is connected to the fork 9, the inner ball head tube 13 being rotatably mounted relative to the outer ball head tube and the connecting piece 6, by means of two thrust bearings, of which only the bottom thrust bearing 14 is illustrated, while the top thrust bearing is at the connecting piece 5. The handlebar tube 10 is located inside the inner ball head tube 13 and is extended against it by means of the extender 15 and the extender bolt 16, while the bottom end of the handlebar tube 10 is provided with a number of grooves 17 which accommodate guide cams 15' of the extender 15. There is also a safety tube 18 which serves to reinforce the construction, and which also prevents the extender from falling into the inner ball head tube if the extender 15 comes away from the extender bolt 16.

As further shown in Fig. 2, the tubular frame 3 does not run through to the sleeve 6'' of the connecting piece 6, but the connection between the tubular frame 3 and the sleeve 6'' is formed by a housing 19 of the lock mechanism, of which the part 19', which has an external diameter which is practically the same as the internal diameter of the tubular frame 3, is pushed into the top end of the tubular frame 3 and connected therein by a welded or soldered joint. The other end of the housing 19 is permanently connected by a corresponding connection to the sleeve 6''. The housing 19 is provided with a keyhole 20, into which a key (not shown) can be inserted to operate the lock mechanism. Accommodated in the housing 19 is the one end of a first locking pin 21, which can be moved to and fro between the extended position shown and the retracted position illustrated by dotted lines 21', for example by turning a key inserted in the keyhole 20. In the extended position, the free end of the locking pin 21 slots into openings 13' and 18', which are provided in the inner ball head tube 13 and the safety tube 18 respectively, as a result of which the inner ball head tube 13, and therefore the handlebar tube 10, can no longer rotate, leaving the bicycle impossible to steer. The housing 19 is provided with means for locking the locking pin 21 in the extended position, said locking being unlockable only by turning a key inserted in the keyhole 20. The openings 13' and 18' can be provided at such a point that in the locked position the fork 9 is turned a little, so that the bicycle cannot be pushed forward in a straight line, which makes it even more difficult for anyone unauthorised to take away the bicycle.

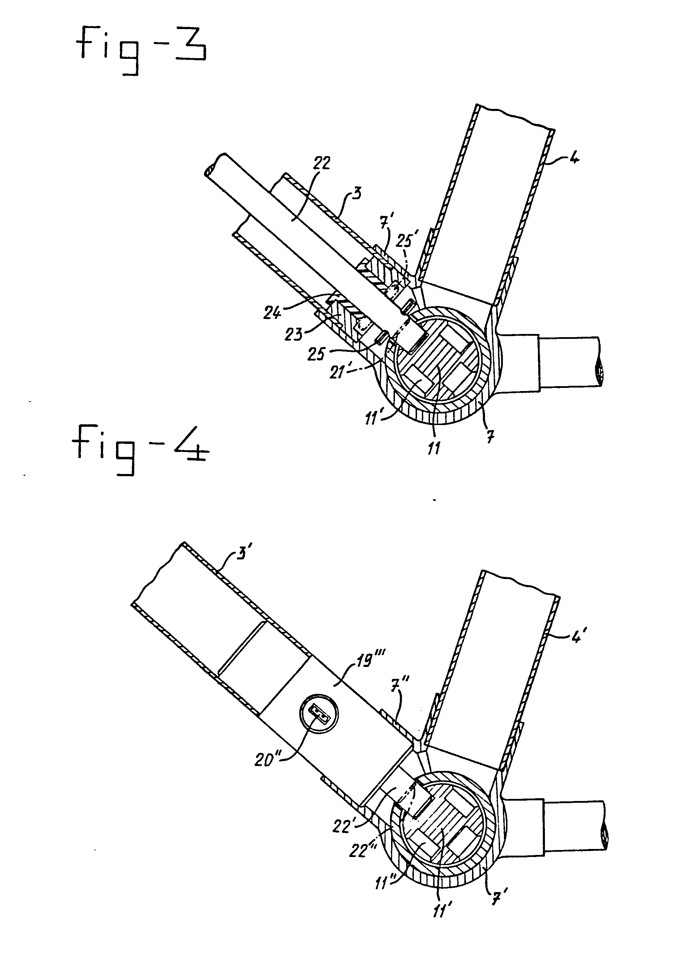

The housing 19 can accommodate one end of a second locking pin 22, said pin 22 extending through the tubular frame 3 until near the pedal shaft 11, as shown in Fig. 3. The locking pin 22 can be moved to and fro, in the same way as the locking pin 21, between the extended position shown in Fig. 3 and the position indicated by dotted lines 22', and can be locked in the extended position. In the extended position of the locking pin 22, the free end of this pin can slot into a recess 11' which is provided in the pedal shaft 11, as a result of which said pedal shaft can no longer rotate and is also locked in the axial direction, so that the pedal shaft cannot be dismantled. In the embodiment shown in Fig. 3, the pedal shaft 11 is provided with four recesses 11', by means of which - through only a slight turning of the pedal shaft 11 - one recess 11' can always be taken in front of the locking pin 21. The sleeve 7' of the connecting piece 7 contains a guide element 23, which is fixed in the sleeve 7' by means of a welded or soldered joint, and which is provided with a box 24 made of plastic, through which the locking pin 22 is guided with a sliding fitting. Fitted in the pin 22 near the free locking end part of the locking pin 22 is a radially extending stop element 25 which, as shown at 25', will come up against the guide element 23 if there is any attempt to remove the locking pin 22, as will be described below.

It will be clear that the lock 19 can also have one locking pin 21, by means of which only the handlebars of the bicycle can be locked, and that if two locking pins 21 and 22 are used the housing 19 of the lock can be provided in an advantageous way roughly in the centre of the tubular frame 3, as shown in Fig. 1 at 19''.

In the embodiment shown in Fig. 4, the housing 19''' of the lock is fixed at one end to the bottom end of the tubular frame 3' and at the other end to the sleeve 7'' of the connecting piece 7'. Accommodated in the housing 19''' is a relatively short locking pin 22', which in the same way as the locking pin 22 can slot into a recess 11'' in the pedal shaft 11' to lock the pedal shaft 11'. The housing 19''' is here provided with a keyhole 20'', into which a key can be inserted to take the locking pin 22' to the retracted position 22''.

If the steering mechanism of the bicycle is locked as shown in Fig. 2, the only way of unlocking it without a key is to saw through or burn through the sleeve 6'', which damages the frame of the bicycle beyond repair. The same applies to the locking shown in Fig. 4, where the only way of unlocking without a key is to saw through the sleeve 7'', which will damage not only the frame, but also the pedal shaft construction, beyond repair.

With a lock 19'' (Fig. 1) which is provided roughly in the middle of the tubular frame 3, the tubular frame 3 and the locking pin running through it could be sawn through near the lock 19' to remove the then detached piece of locking pin from the opening and/or recess concerned. If, however, one uses the design according to Fig. 3, the locking pin cannot be removed, since this is prevented by the stop 25.

The locking pins 21, 22 and 22' are preferably taken into the extended position by means of a spring construction (not shown), so that, for example by turning the key, the spring construction is tensioned and thereafter by turning the handlebar tube and/or the pedal shaft the opening or recess in question can be taken in front of the free end of the locking pin, following which the locking pin is pressed into this opening or recess by the force of the spring.

The lock 19, 19'', 19''' can also be designed in such a way that the locking pin(s) is (are) first taken by hand to the extended position and (is) are then locked there by turning the key.

----------

## Claims

1. Locking device for a bicycle, comprising a lock construction consisting of a housing with a keyhole and means for moving at least one locking pin, with one end accommodated in the housing, to and fro beteen a retracted and an extended position, and with devices fitted in the housing by means of which the locking pin can be locked at least in the extended position and can be taken to the retracted position only by means of a key or similar object inserted in the keyhole, said housing being accommodated in and connected to a tube of the frame of the bicycle, and said locking pin being able to move to and fro essentially along the centre line of this tube and with its other free end, in the extended position, being able to slot into an opening or recess provided in at least one of the parts of the bicycle rotatably mounted in the frame, characterised in that the housing of the lock forms an integral part, essentially unbreakably attached at both ends, of the tubular frame running at an angle from the pedal shaft to the ball head.

2. Device according to Claim 1, characterised in that provision is made in the pedal shaft of the bicycle for at least one recess into which the free end of the locking pin can slot.

3. Device according to Claim 1, characterised in that the opening into which the locking pin can slot is provided in the inner ball head tube.

4. Device according to Claims 1-3, characterised in that the housing of the lock forms an end part of said tubular frame, so that the outer end of the housing is fixed in a sleeve of one of the connecting pieces of said tubular frame.

5. Device according to Claims 1-3, characterised in that the housing of the lock forms a part of the tubular frame situated

0156416

between the ends of said tubular frame.

6. Device according to Claim 5, characterised in that provision is made in an end part of said tubular frame for a guide element provided with an opening, through which the locking pin is guided with a sliding fitting, and provided on the locking pin is a stop element extending radially from the pin, and being between the guide element and the free locking end part of the locking pin.

7. Device according to Claims 1-6, characterised in that the locking pin can be taken to the extended position by means of a spring construction.

fig-1

fig-2

fig-3

fig-4

| European Patent Office | EUROPEAN SEARCH REPORT | Application number |
| | | 0156416 |
| | | EP 85 20 0271 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1 460 015 (ALFONSO CAPPELLARI)<br>* Figures 1-15; page 1, lines 33-110; page 2, lines 1-98 * | 1 | B 62 H 5/06<br>B 62 H 5/08 |
| A | NL-C- 72 564 (VAN VLIET)<br>* Figures 1,2; column 2, lines 5-50; column 3 * | 1 | |
| A | NL-A-8 100 343 (WILCKE)<br>* Figures 1,2; page 3, lines 21-40; pages 4-6 * | 1 | |
| D,A | NL-C- 2 380 (KOOPS) | | |
| D,A | NL-C- 40 050 (BLITS) | | TECHNICAL FIELDS SEARCHED (Int. Cl.4) |
| | ----- | | B 62 H |

The present search report has been drawn up for all claims

| Place of search | Date of completion of the search | Examiner |
|---|---|---|
| THE HAGUE | 03-06-1985 | VANNESTE M.A.R. |